# EUROPÄISCHE PATENTANMELDUNG

(11) **EP 2 090 502 A2**
(43) Veröffentlichungstag der Anmeldung: **19.08.2009**
(21) Anmeldenummer: 09001325.1
(22) Anmeldetag: 30.01.2009
(51) Int. Cl.: B62J 1/28

(54) **Stützeinrichtung**

(30) Priorität: 31.01.2008 DE 202008001439 U
(71) Anmelder: Hefele, Wilhelm Josef, 86922 Eresing (DE)
(72) Erfinder: Hefele, Wilhelm Josef, 86922 Eresing (DE)
(74) Vertreter: Winter, Brandl, Fürniss, Hübner Röss, Kaiser, Polte Partnerschaft Patent- und Rechtsanwaltskanzlei

(57) **Zusammenfassung**

Offenbart ist eine Stützeinrichtung für ein pedalbetriebenes Rad, insbesondere ein Fahrrad, mit einer Kreuzbeinstütze, die einen rückwärtigen Sattelrand eines Sattels überragt. Die erfindungsgemäße Stützeinrichtung ist mittels einer Befestigungseinrichtung lösbar an einem Sattel oder einem zum Sattel gehörenden Bauelement befestigbar.

## Beschreibung

Die Erfindung betrifft eine Stützeinrichtung für ein pedalbetriebenes Rad gemäß dem Oberbegriff des Anspruchs 1.

Beim Fahrradfahren versucht der Fahrer durch Strecken der Beine die dadurch entstehende Kraft über die Pedale und die Kette auf das Hinterrad zu bringen. Beim Strecken der Beine über die Muskelkette der Gesäß-Oberschenkelmuskulatur und die beiden Drehpunkte des Hüft- und Kniegelenkes verteilt sich die gleiche Kraft, die nach unten gebracht wird ebenfalls nach oben. Durch das Körpergewicht des Fahrers und durch das Festhalten am Lenker, wird versucht, diese Kraft gezielt nach unten auf die Pedale zu bringen. Ein Teil dieser Kraft geht dabei trotzdem in horizontaler Richtung verloren, und muss durch die Kraft der Arme und der Bauchmuskulatur aufgefangen werden. Am Auffälligsten wird dies beim Bergauffahren, da hierbei der Körper vermehrt das Bestreben hat, auf dem Sattel nach hinten zu rutschen. Um den Körper in der richtigen Sitzposition zu halten, bedarf es eines zusätzlichen Aufwandes an Armkraft und Spannung der Bauchmuskulatur.

In der EP 0 816 214 B1 ist ein Fahrradsattel offenbart, bei dem rückseitig eine Stützeinrichtung in Form einer Kreuzbeinstütze ausgebildet ist. Diese Stützeinrichtung ist in den Sattel integriert, so dass beispielsweise beim Bergauffahren die vorbeschriebene Problematik gemildert werden kann. Nachteilig bei dieser Lösung ist allerdings, dass der Sattel äußerst voluminös ausfällt und bei Fahrbedingungen, bei denen die Kreuzbeinstütze nicht benötigt wird, den Fahrer oder die Fahrerin behindert. Dies ist beispielsweise beim Bergabfahren der Fall, bei dem der Überschlagsgefahr durch Verlagern des Körperschwerpunkts hinter den Sattel entgegen gewirkt wird. Bei der herkömmlichen Lösung wird diese Ausgleichsbewegung behindert. Ein weiterer Nachteil der bekannten Lösung besteht darin, dass der Aufwand zur Herstellung des Sattels erheblich ist.

Demgegenüber liegt der Erfindung die Aufgabe zugrunde, eine Stützeinrichtung für ein Fahrrad oder ein sonstiges pedalbetriebenes Fahrzeug zu schaffen, die mit vergleichsweise geringem Aufwand eine Kreuzbeinabstützung ermöglicht und den Fahrer nicht behindert.

Diese Aufgabe wird durch eine Stützeinrichtung mit den Merkmalen des Anspruchs 1 gelöst.

Erfindungsgemäß ist die Stützeinrichtung für ein Fahrrad oder ein sonstiges pedalbetriebenes Rad mit einer am Kreuzbein der Fahrerin oder des Fahrers anliegenden Kreuzbeinstütze ausgeführt, die im Unterschied zum herkömmlichen Stand der Technik jedoch nicht in den Sattel integriert ist sondern von einer Befestigungseinrichtung gehalten ist, die lösbar am Sattel oder einem diesen zugeordneten Bauteil, beispielsweise einem Sattelrohrs befestigt ist.

Durch die lösbare Befestigung ist es möglich, die Stützeinrichtung je nach Anwendungsfall anzubringen oder abzunehmen, so dass eine Behinderung des Fahrers oder der Fahrerin nicht erfolgt. Des Weiteren kann praktisch jeder Sattel mit der erfindungsgemäßen Kreuzbeinstütze nachgerüstet werden, so dass die Investitionskosten gegenüber der eingangs beschriebenen Speziallösung minimal sind.

Durch die erfindungsgemäße Abstützung des Kreuzbeines des Fahrers kann die gesamte Kraft durch das Treten auf die Pedale gebracht werden und geht nicht ungenützt verloren. Dies führt zum einen zu deutlich höheren Geschwindigkeiten bei der Fahrt und sorgt des Weiteren zu einer erheblichen Kraftersparnis.

Bei einem besonders bevorzugten Ausführungsbeispiel der Erfindung hat die Befestigungseinrichtung einen Fixierblock, über den die Kreuzbeinstütze an einem Sattelrohr befestigbar ist. Bei dieser Lösung wird es bevorzugt, wenn die Kreuzbeinstütze über einen Stützarm an dem Fixierblock gehalten ist.

Dabei wird es besonders bevorzugt, wenn der Stützarm zumindest eine Schiene hat, entlang der die Kreuzbeinstütze mit Bezug zum Fixierblock verstellbar geführt ist, so dass die Längsposition der Kreuzbeinstütze auf einfache Weise an die Anatomie des Fahrers anpassbar ist.

Die zumindest eine Schiene kann entlang einer bogenförmigen Führung in Horizontal- und Vertikalrichtung verstellbar sein.

Die Handhabung der Stützeinrichtung ist besonders einfach, wenn die Kreuzbeinstütze schwenkbar am Stützrahmen gehalten ist, so dass sie auf einfache Weise aus einer Grundposition in eine Stützposition verschwenkt werden kann.

Die Betriebssicherheit ist verbessert, wenn die Stützeinrichtung mit einer Verriegelung zum Festlegen der Kreuzbeinstütze in dieser Stützposition ausgeführt ist.

Diese Verriegelung kann beispielsweise einen Sperrhaken haben, der in der Stützposition in Verriegelungseingriff mit einem Sperrelement steht.

Der Bedienungskomfort ist weiter verbessert, wenn die Stützeinrichtung mit einer Betätigungseinrichtung zum Lösen oder Herstellen der Verriegelung und/oder zum Verschwenken der Kreuzbeinstütze aus der vorgenannten Grundposition in die Stützposition oder in umgekehrter Richtung versehen ist.

Diese Betätigungsvorrichtung kann beispielsweise ein Federelement haben, das die Kreuzbeinstütze in Richtung ihrer Grundposition beaufschlagt.

Bei einem Ausführungsbeispiel ist das Federelement als Gummiband oder dergleichen ausgeführt, das sowohl den Sperrhaken als auch einen Tragarm des Stützarms umschlingt, so dass die Kreuzbeinstütze in Richtung der Grundposition und der Sperrhaken in Richtung der Verriegelungsposition beaufschlagt ist.

Die Betätigungseinrichtung kann auch einen Stellzylinder aufweisen, der die Kreuzbeinstütze in Richtung der Stützposition oder in Richtung der Grundposition beaufschlagt.

Eine weitere Verbesserung des Fahrkomforts erhält man, wenn die Betätigung mittels eines Seilzugs oder auf sonstige Weise vom Lenker oder von einem sonstigen Bauteil aus erfolgt. Alternativ kann die Betätigung auch von Hand erfolgen.

Bei einer besonders einfach aufgebauten Lösung ist die Kreuzbeinstütze über einen Tragarm an dem Stützarm gehalten.

Der Tragarm kann mit einer Ausnehmung versehen sein, in die der Sperrhaken beim Verschwenken des Tragarms zur Verriegelung eingreift.

Bei einem konkreten Ausführungsbeispiel ist die Kreuzbeinstütze als etwa scheibenförmiges Stützelement ausgeführt.

Zur Höhenverstellbarkeit der Relativposition der Kreuzbeinstütze mit Bezug zum Sattel kann diese verstellbar am Stützarm geführt sein.

Sonstige vorteilhafte Weiterbildungen der Erfindung sind Gegenstand weiterer Unteransprüche.

Bevorzugte Ausführungsbeispiele der Erfindung werden im Folgenden anhand schematischer Zeichnungen erläutert. Es zeigen:
Figur 1 eine schematische Darstellung einer Stützeinrichtung zum Nachrüsten an einem Sattel in einer Stützposition;
Figur 2 eine Schnittdarstellung der Stützeinrichtung aus Figur 1 in der Stützposition;
Figur 3 eine Detailansicht der Stützeinrichtung in der Stützposition;
Figur 4 die Stützeinrichtung gemäß Figur 3 im entriegelten Zustand;
Figur 5 die Stützeinrichtung in einer Grundposition;
Figur 6 eine Ansicht von hinten auf die Stützeinrichtung gemäß Figur 5 und
Figur 7 eine Möglichkeit zur Vorspannung der Stützeinrichtung.

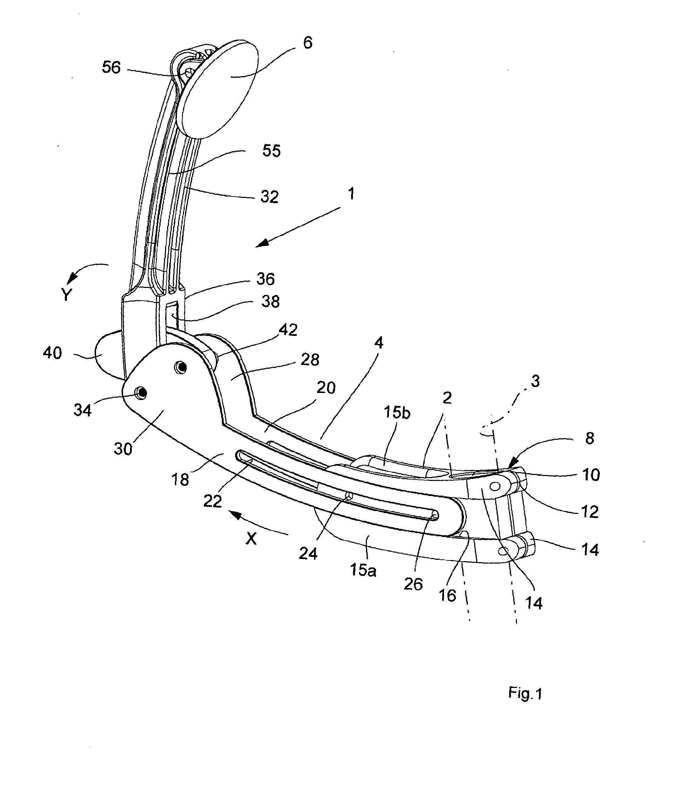

Figur 1 zeigt ein Ausführungsbeispiel einer Stützeinrichtung 1, die an einem strichpunktiert angedeuteten Sattelrohr 3 eines Fahrradsattels befestigbar ist. Das heißt, die erfindungsgemäße Stützeinrichtung 1 ist als Nachrüstbauteil vorgesehen, das bei praktisch jedem herkömmlichen Fahrrad oder ähnlichen pedalbetriebenen Fahrzeugen nachrüstbar ist.

Die Stützeinrichtung 1 hat einen Fixierblock 2 aus Metall oder Kunststoff, der einerseits am Sattelrohr 3 fest geklemmt wird und andererseits über einen Stützarm 4 eine Kreuzbeinstütze 6 trägt. Der Fixierblock 2 hat eine Klemmung 8 mit einer vom Sattelrohr 3 durchsetzten Klemmbohrung 10, deren Umfangswandung mit einem radial verlaufenden Klemmschlitz 12 versehen ist, der in herkömmlicher Weise über zwei parallel zueinander angeordnete Klemmschrauben (nicht dargestellt) verspannbar ist, die in jeweils eine Spannaufnahme 14 einsetzbar sind und zum Klemmen des Fixierblocks 2 auf dem Sattelrohr angezogen werden.

Der von der Klemmung 8 entfernte Endabschnitt des Fixierblocks 2 ist mit einer Ausnehmung versehen, so dass sich zwei Führungsschenkel 15a, 15b ergeben. An den außen liegenden Seitenwangen des Fixierblocks 2 sind jeweils Führungsausnehmungen 16 (nur eine sichtbar in Figur 1) ausgebildet, in denen Endabschnitte von zwei parallel verlaufenden Trägerschienen 18, 20 des Stützarms 4 angeordnet sind. Die Führungsausnehmung 16 und die in diese eintauchenden Trägerschienen 18, 20 sind bogenförmig ausgeführt. Die beiden Trägerschienen 18, 20 sind jeweils mit einem Längsschlitz 22 versehen, der entsprechend der Krümmung der Trägerschienen 18, 20 und der Führungsausnehmung 16 bogenförmig ausgeführt ist. Jeder der beiden Längsschlitze 20 ist von zwei nicht dargestellten Befestigungsschrauben durchsetzt, die in jeweils eine Befestigungsbohrung 24, 26 an den Seitenwangen des Fixierblocks 2 eingeschraubt werden. Die Länge der Längsschlitze 22 ist wesentlich länger als die entsprechende Länge des Fixierblocks 2 ausgeführt, so dass die beiden Trägerschienen 18, 20 bei Lösen der Befestigungsschrauben entlang der Führungsausnehmungen 16 in X-Richtung verstellbar sind. Da die Führungsausnehmungen 16 seitlich offen sind, können die Endabschnitte der beiden Trägerschienen 18, 20 nach rechts über den Fixierblock 2 hinausgeschoben werden, so dass dann das strichpunktiert angedeutete Sattelrohr 3 zwischen den beiden Trägerschienen 18, 20 liegt. Entsprechend der bogenförmig gekrümmten Führungsausnehmungen 16 und der entsprechend ausgebildeten Längsschlitze 22 wird die Kreuzbeinstütze 6 bei einer Verstellung der Trägerschienen 18, 20 in X-Richtung sowohl in Horizontalrichtung (Fahrradlängsrichtung) als auch in Vertikalrichtung verstellt. D.h. bei einem Verschieben nach links in Figur 1 wird die Kreuzbeinstütze 6 weg vom Sattelrohr 3 und gegenüber dem Sattel auch nach oben (Ansicht gemäß Figur 1) verstellt. Die beiden Trägerschienen 18, 20 sind dabei derart in den Führungsausnehmungen 16 des Fixierblocks 2 geführt, dass die Außenflächen der Führungsschenkel 15a, 15b und die außen liegenden Großflächen der Trägerschienen 18, 20 bündig verlaufen.

Auf diese Weise kann die Relativpositionierung der Kreuzbeinstütze 6 mit Bezug zum Sattel im Hinblick auf die Anatomie des Fahrers und die Geometrie des Sattels angepasst werden. Die in Figur 1 links angeordneten, vom Fixierblock 2 entfernten Endabschnitte der beiden Trägerschienen 18, 20 sind zu Gelenkwangen 28, 30 nach oben hin verbreitert, an denen ein Tragarm 32 über ein Schwenkgelenk 34 gelagert ist. Diese Schwenklagerung erfolgt so, dass der Tragarm 32 aus seiner dargestellten Stützposition in Y-Richtung in eine Grundposition verschwenkbar ist, in der die Kreuzbeinstütze 6 unter den Sattel verschwenkt ist. Beim dargestellten Ausführungsbeispiel hat der Tragarm 32 einen Gelenkabschnitt 36, der in den Bereich zwischen den beiden Gelenkwangen 28, 30 gleitend eintaucht und auf einen Gelenkbolzen des Schwenkgelenkes 34 gelagert ist. Der Gelenkabschnitt 36 des Tragarms 32 ist mit einem etwa rechteckförmigen Durchbruch 38 ausgeführt, der beim dargestellten Ausführungsbeispiel in der Stützposition von einem Sperrhaken 40 durchsetzt wird. Dieser ist schwenkbar an einem Schwenkbolzen 42 gelagert, der parallel zum Schwenkgelenk 34 an den Gelenkwangen 28, 30 befestigt ist. Gemäß Figur 1 verläuft die Schwenkebene des Sperrhakens 40 etwa mittig zwischen den beiden Gelenkwangen 28, 30.

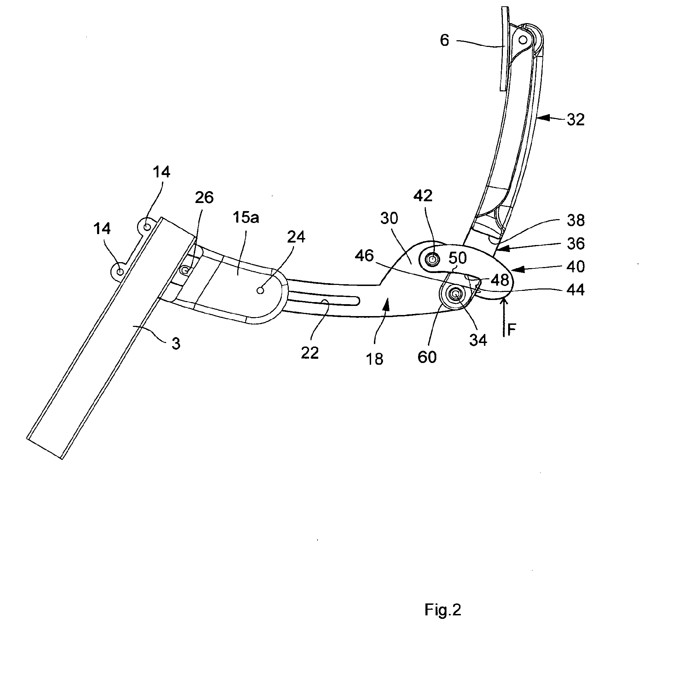

Figur 2 zeigt die Stützeinrichtung 1 gemäß Figur 1 in einer Schnittdarstellung, wobei sich die Schnittebene durch die Mittelebene der Stützeinrichtung 1 in Figur 1 erstreckt. Dabei ist die Stützeinrichtung 1 gegenüber der Darstellung in Figur 1 etwa um 180° um die Hochachse verdreht.

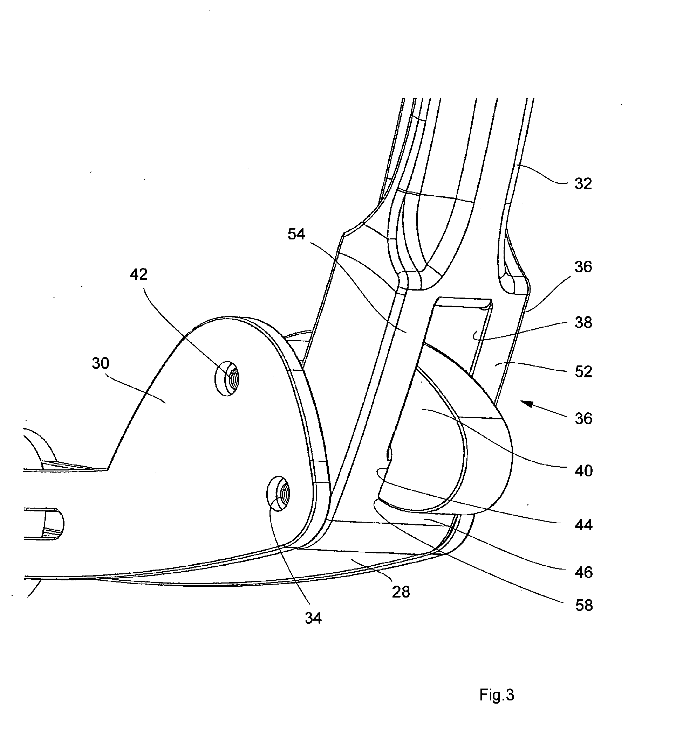

Gemäß dieser Darstellung durchsetzt der vom Schwenkbolzen 42 entfernte Endabschnitt des Sperrhakens 40 den Durchbruch 38 und liegt mit einer Verriegelungsfläche 44 an einer Rückseite 46 des Gelenkabschnittes 36 an. Beim dargestellten Ausführungsbeispiel liegt auch der sich etwa rechtwinklig an die Verriegelungsfläche 44 anschließende Anlagebereich 48 des Sperrhakens 40 flächig an der entsprechend ausgebildeten unteren Stirnwange 50 des Durchbruchs 38 an. Dabei ist der Sperrhaken 40 über eine nicht dargestellte Spannfeder in seine Verriegelungsposition (Figur 2) vorgespannt, so dass der Tragarm 32 mit Bezug zu den beiden Trägerschienen 18, 20 und somit zum Sattelrohr 3 lagefixiert ist. Dieser Eingriff des Sperrhakens 40 in den Durchbruch 38 des Gelenkabschnittes 36 des Tragarms 32 ist in Figur 3 vergrößert dargestellt. Man erkennt deutlich, dass der Sperrhaken 40 passgenau zwischen Seitenwangen 52, 54 des Gelenkabschnittes 36 eingreift und mit der vorgenannten Verriegelungsfläche 44 die Rückseite 46 des Gelenkabschnittes 36 hintergreift.

Zur Gewichtsminimierung ist der Tragarm 32 im Anschluss an den Gelenkabschnitt 36 mit Gewichtsreduziernuten oder Durchbrüchen 55 versehen. An dem vom Gelenkabschnitt 36 entfernten Endabschnitt ist die etwa kissenförmig ausgebildete Kreuzbeinstütze 6 über ein Kreuzbeinstützengelenk 56 schwenkbar gelagert, so dass die Kreuzbeinstütze 6 um eine Horizontalachse verschwenkbar ist, um eine optimale Anpassung an den Beckenbereich des Fahrers zu ermöglichen.

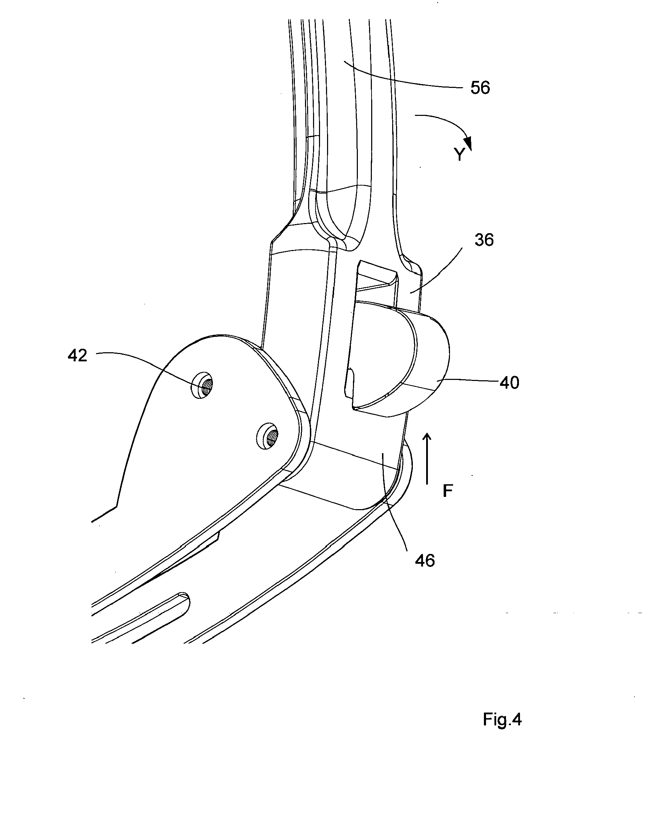

Zum Lösen der Verriegelung kann der sich nach hinten (rechts in den Figuren 2, 3) aus dem Durchbruch 38 erstreckende Endabschnitt des Sperrhakens 40 in Pfeilrichtung F (siehe Figur 4) von Hand in Pfeilrichtung F nach oben bewegt werden, so dass der Sperrhaken 40 eine entsprechende Schwenkbewegung um seinen Schwenkbolzen 42 durchführt und von der Rückseite 46 des Gelenkabschnittes 36 frei kommt. Bei weiterer Bewegung des Sperrhakens 40 wird der Eingriff mit der Rückseite 46 vollständig aufgehoben, so dass der Tragarm 32 in Y-Richtung (siehe Figuren 1, 4) nach unten schwenken kann. Diese Schwenkbewegung kann durch eine Torsionsfeder oder ein sonstiges Betätigungselement unterstützt werden, durch die der Tragarm 32 in Richtung seiner Grundposition vorgespannt ist.

Wie zuvor erläutert, kann diese Entriegelung per Hand erfolgen, indem der Fahrer nach hinten greift, um den Sperrhaken 40 in F-Richtung nach oben zu bewegen. Prinzipiell ist es natürlich auch möglich, den Sperrhaken 40 mittels eines zum Lenker geführten Bowdenzugs oder einer sonstigen, beispielsweise pneumatisch, hydraulisch oder elektromotorisch unterstützten Einrichtung zu verschwenken.

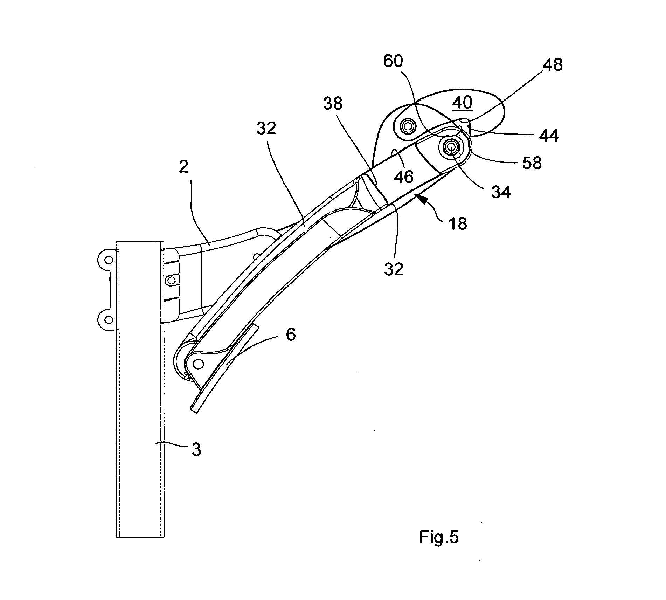

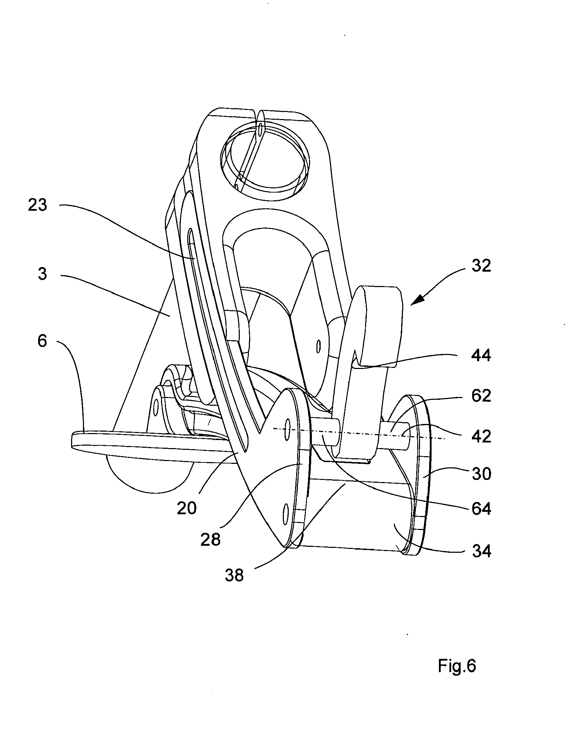

Diese Grundposition ist in den Figuren 5 und 6 dargestellt. Man erkennt, dass der Tragarm 32 um mehr als 180° um das Schwenkgelenk 34 nach unten geschwenkt ist, wobei sich dann der Sperrhaken 40 vollständig aus dem Durchbruch 38 des Tragarms 32 heraus bewegt wird und mit seiner Sperrhakenkante 38 an der gewölbten Stirnfläche 60 (16) aufliegt und während der Schwenkbewegung abgleitet. Bei dieser Schwenkbewegung taucht der Tragarm 32 abschnittsweise zwischen die beiden Trägerschienen 18, 20 und die beiden Führungsschenkel 15a, 15b ein bis er in Anlage an den Fixierblock 2 gelangt. In dieser Grundposition wird der Tragarm 32 dann durch die Kraft der nicht dargestellten Torsionsfeder oder sonstigen Vorspanneinrichtung gehalten. Zum Rückverschwenken greift der Fahrer unter den Sattel und verschwenkt den Tragarm 32 mit der Kreuzbeinstütze 6 entgegen der Y-Richtung nach oben in die in Figur 2 dargestellte Stützposition, in der der Sperrhaken 40 aufgrund seiner Vorspannung in den vorstehend geschilderten Verriegelungseingriff gelangt.

In Figur 6 ist die Stützeinrichtung von hinten, d.h. von rechts gemäß Figur 5 dargestellt, wobei allerdings der Sperrhaken 40 ohne Vorspannung in Abweichung von der Darstellung in Figur 5 vollständig nach oben (Ansicht nach Figur 5) weg vom Tragarm 32 verschwenkt ist. In dieser Darstellung erkennt man, dass der Sperrhaken 40 mittig auf dem Schwenkbolzen 42 geführt ist, der in die beiden Gelenkwangen 28, 30 eingesetzt ist - dieser Gelenkbolzen 32 ist in der Darstellung gemäß Figur 6 lediglich strichpunktiert angedeutet. Die Zentrierung des Sperrhakens 40 mit Bezug zu den beiden seitlichen Gelenkwangen 28, 30 erfolgt über zwei Buchsen 62, 64, die beidseitig des Sperrhakens 40 auf den strichpunktierten Schwenkbolzen 42 aufgesetzt sind und somit den Sperrhaken 40 zentrieren. Die Beaufschlagung des Sperrhakens 40 in Verriegelungsrichtung kann beispielsweise durch eine Torsionsfeder erfolgen, deren beide Federschenkel an den beiden Gelenkwangen 28, 30 abgestützt sind, die beiden Buchsen 62, 64 oder den Gelenkbolzen 32 umschlingen und dann im mittleren Bereich die in Figur 6 vom Betrachter weg gewandte Rückseite des Sperrhakens 40 (oben in Figur 5) überstreckt, so dass der Sperrhaken 40 nach unten in Anlage an den Tragarm 32 beaufschlagt wird. In entsprechender Weise kann der Tragarm 32 durch eine in das Schwenkgelenk 34 integrierte Torsionsfeder in Richtung der Grundposition beaufschlagt sein.

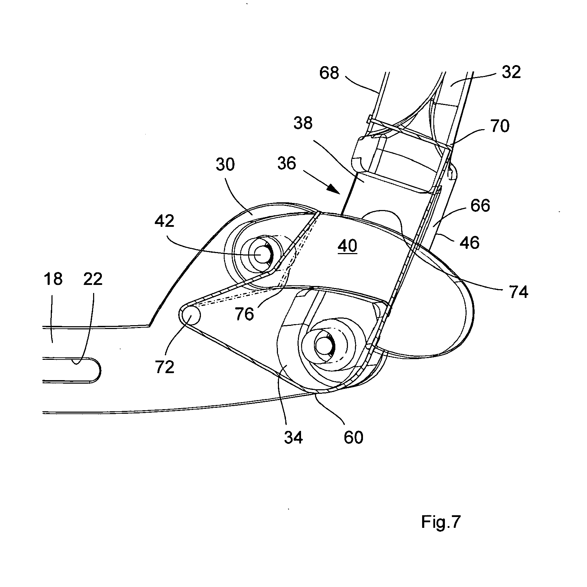

Figur 7 zeigt eine sehr einfache Lösung, bei der der Tragarm 32 und somit die Kreuzbeinstütze 6 und der Sperrhaken 40 durch ein gemeinsames Federelement in Richtung der Grundposition bzw. der Verriegelungsposition beaufschlagt sind. Figur 7 zeigt dabei den Bereich des Sperrhakens 40 in einer Schnittdarstellung gemäß Figur 2, d.h. es ist lediglich die Gelenkwange 30 und eine Hälfte des Tragarms 32 dargestellt, wobei die Trennebene mittig durch den Durchbruch 38 verläuft. In der in Figur 7 dargestellten Position befindet sich der Sperrhaken 40 in Verriegelungseingriff mit dem Tragarm 32 - letzterer befindet sich entsprechend in seiner Stützposition. Die Beaufschlagung in Richtung der Verriegelungsposition bzw. der Grundposition erfolgt bei dem in Figur 7 dargestellten Ausführungsbeispiel über ein federelastisches Zugelement, beispielsweise ein hochwertiges Gummiband/-seil 66, dessen einer Endabschnitt an der kreuzbeinstützenseitigen Seitenkante 68 des Gelenkabschnittes 36 festgelegt ist. Oberhalb des Durchbruchs 38 ist im Gelenkabschnitt 36 eine den Tragarm 32 in Querrichtung durchsetzende Bohrung 70 ausgebildet, die vom Gummiband 66 durchsetzt ist. Dieses Gummiband 66 tritt an der Rückseite 46 des Gelenkabschnittes 36 aus dem Tragarm 32 aus, wird dann nach unten hin zum Sperrhaken 40 umgelenkt und verläuft entlang der in Figur 7 sichtbaren Großfläche des Sperrhakens 40 an der Rückseite 46 des Gelenkabschnittes 36 entlang. Zur Führung kann im Bereich dieser Rückseite eine entsprechende Führungsnut für das Gummiband 66 ausgebildet sein, die sich dann entsprechend von der Mündung der Bohrung 70 bis zur Stirnfläche 60 des Gelenkabschnittes 36 verläuft, so dass das Gummiband 66 exakt geführt ist. Von der Stirnfläche 60 des Gelenkabschnittes 36 erstreckt sich das Gummiband 66 dann etwa tangential bis zu einem in die beiden Gelenkwangen 28, 30 eingesetzten Spannbolzen 72, umgreift diesen abschnittsweise und erstreckt sich dann weiter bis zum Umfang des Schwenkbolzens 42 oder der Buchse 64. Von diesem weg verläuft das Gummiband dann entlang der in Figur 7 sichtbaren Großfläche bis zur Seitenfläche 74 des Sperrhakens 40, überstreckt diese und erstreckt sich dann entlang der in Figur 7 nicht sichtbaren Rückseite zurück zum Schwenkbolzen 42 oder genauer gesagt zur Buchse 62 und dann auf dem gleichen Weg wie in Figur 7 dargestellt entlang der anderen Seite des Sperrhakens 40 über die Rückseite 46 des Tragarms 32 durch eine weitere oder gemeinsame Bohrung hindurch zur Seitenkante 68 des Tragarms 32 und ist dann dort verankert. Durch diese Umschlingung wird der Sperrhaken 40 in Richtung seiner Verriegelungsposition und der Tragarm 32 in Richtung seiner Grundposition beaufschlagt, wobei durch den Spannbolzen 72 stets gewährleistet ist, dass das Gummiband 66 mit hinreichender Spannung wirksam ist.

Mit gestrichelten Linien ist in Figur 7 eine alternative Führung dargestellt. Bei dieser Variante erstreckt sich das Gummiband 66 vom Spannbolzen 72 weg durch eine gestrichelt angedeutete Bohrung 76 des Sperrhakens 40, die in der vorgenannten Seitenfläche 74 mündet, diese abschnittsweise überstreckt und dann in einem parallelen Weg wieder zurückgeführt ist, so dass sich in etwa der gleiche Umschlingungsverlauf wie beim zuvor beschriebenen Ausführungsbeispiel ergibt.

Zur Führung des Gummibands 66 im Tragarm 32 und/oder im Sperrhaken 40 können jeweils zwei Bohrungen oder eine gemeinsame große Bohrung verwendet werden. Eine derartige gummielastische Vorspannung ist sehr einfach aufgebaut und zeichnet sich dabei durch ein sehr geringes Gewicht, hohe Verschleißfestigkeit und einfache Auswechselbarkeit aus.

Falls der Sperrhaken 40 mittels eines Bowdenzugs entriegelt wird, kann dessen Hülle beim zuvor beschriebenen Ausführungsbeispiel am Spannbolzen 72 abgestützt sein, während die Seele sich dann weiter zur Rückseite des Sperrhakens 40 erstreckt und dort an einem nicht dargestellten Nippel oder dergleichen angreift.

In kinematischer Umkehr kann der Tragarm 32 auch in Richtung seiner Stützposition vorgespannt werden, so dass die Kreuzbeinstütze 6 dann in der Grundposition verriegelt werden muss und bei Entriegelung selbsttätig in die Stützposition verschwenkt, in der sie dann wiederum durch eine Verriegelung gehalten werden sollte. Bei entsprechend starker Vorspannung könnte jedoch auch auf eine derartige Verriegelung verzichtet werden. Anstelle der Vorspannung mittels Torsionsfedern oder dergleichen können - wie eingangs erläutert - auch andere Betätigungselemente, beispielsweise pneumatisch oder hydraulisch wirkende Betätigungszylinder als Vorspannelemente eingesetzt werden.

Bei einem einfach ausgeführten Ausführungsbeispiel kann auf die Verschwenkbarkeit des Tragarms 32 verzichtet werden, wobei allerdings die oben geschilderte Verstellmöglichkeit zur Anpassung an die Sattelgeometrie und die Anatomie des Fahrers weiterhin möglich sein sollte. D.h. bei dieser vereinfachten Variante verbleibt der Tragarm 32 stets in seiner Stützposition, kann jedoch dann, wenn er nicht benötigt wird, von der Sattelstütze 3 abgenommen werden. Bei einer derartigen Variante dürfte es vorteilhaft sein, anstelle der Schraubverbindung eine Schnellspannverbindung zum Befestigen der Stützeinrichtung am Sattelrohr 3 vorzunehmen, so dass die Montage/Demontage sehr schnell und ohne Werkzeug erfolgen kann.

Bei den vorbeschriebenen Ausführungsbeispielen wird der Tragarm 32 in Fahrradlängsrichtung verschwenkt. Bei einer alternativen Variante kann der Tragarm 32 auch seitlich weggeklappt werden, wobei das Gelenk zwischen den Trägerschienen 18, 20 und dem Tragarm 32 dann entsprechend mit einer Schwenkachse ausgeführt ist, die etwa in Fahrradlängsrichtung verläuft. Prinzipiell könnte man bei dieser Variante auch die gesamte Anordnung mit Halteschienen 18, 20 und Tragarm 32 verstellbar am Fixierblock 2 lagern und diesen dann mit dem genannten Schwenkgelenk versehen, so dass ein Teil des Fixierblocks 2 mit dem Stützarm 4 und der Kreuzbeinstütze 6 seitlich weggeschwenkt werden kann.

Bei den vorbeschriebenen Ausführungsbeispielen ist die Kreuzbeinstütze 6 über ein Kreuzbeinstützengelenk schwenkbar gelagert. Prinzipiell ist es auch möglich, die Kreuzbeinstütze 6 höhenverstellbar am Tragarm 32 zu lagern. Dazu kann beispielsweise an dem oben liegenden Endabschnitt des Tragarms 32 ein Längsschlitz ausgeführt sein, entlang dem die Kreuzbeinstütze 6 mit dem Kreuzbeinstützengelenk 56 in Höhenrichtung verstellbar geführt ist.

Offenbart ist eine Stützeinrichtung für ein pedalbetriebenes Rad, insbesondere ein Fahrrad, mit einer Kreuzbeinstütze, die einen rückwärtigen Sattelrand eines Sattels überragt. Die erfindungsgemäße Stützeinrichtung ist mittels einer Befestigungseinrichtung lösbar an einem Sattel oder einem zum Sattel gehörenden Bauelement befestigbar.

### Bezugszeichen

- 1: Stützeinrichtung
- 2: Fixierblock
- 3: Sattelrohr
- 4: Stützarm
- 6: Kreuzbeinstütze
- 8: Klemmung
- 10: Klemmbohrung
- 12: Klemmschlitz
- 14: Spannaufnahme
- 15a: Führungsschenkel
- 15b: Führungsschenkel
- 16: Führungsausnehmung
- 18: Trägerschiene
- 20: Trägerschiene
- 22: Längsschlitz
- 24: Befestigungsbohrung
- 26: Befestigungsbohrung
- 28: Gelenkwange
- 30: Gelenkwange
- 32: Tragarm
- 34: Schwenkgelenk
- 36: Gelenkabschnitt
- 38: Durchbruch
- 40: Sperrhaken
- 42: Schwenkbolzen
- 44: Verriegelungsfläche
- 46: Rückseite
- 48: Anlagebereich
- 50: Stirnwange
- 52: Seitenwange
- 54: Seitenwange
- 55: Gewichtsreduziernut
- 56: Kreuzbeinstützengelenk
- 58: Sperrhakenkante
- 60: Stirnfläche
- 62: Buchse
- 64: Buchse
- 66: Gummiband
- 68: Stirnfläche
- 70: Bohrung
- 72: Spannbolzen
- 74: Seitenfläche
- 76: Bohrung

## Patentansprüche

1. Stützeinrichtung für ein pedalbetriebenes Rad, insbesondere ein Fahrrad, mit einer Kreuzbeinstütze (6), die einen rückwärtigen Sattelrand eines Sattels überragt, **gekennzeichnet durch** eine Befestigungseinrichtung (2, 4, 32), über die die Kreuzbeinstütze (6) lösbar im Sattelbereich befestigbar ist.

2. Stützeinrichtung nach Anspruch 1, wobei die Befestigungseinrichtung einen Fixierblock (2) zum Festlegen an einem Sattelrohr (3) hat, an dem die Kreuzbeinstütze (6) mittels eines Stützarms (4) gehalten ist.

3. Stützeinrichtung nach Anspruch 2, wobei der Stützarm (4) zumindest eine Schiene (18, 20) hat, über die die Kreuzbeinstütze (6) mit Bezug zum Fahrer verstellbar geführt ist.

4. Stützeinrichtung nach Anspruch 3, wobei die Schiene (18, 20) entlang einer bogenförmigen Führung (16, 22; 24, 26) verstellbar ist.

5. Stützeinrichtung nach Anspruch 2, 3 oder 4, wobei die Kreuzbeinstütze (6) schwenkbar am Stützarm (4) gelagert ist.

6. Stützeinrichtung nach Anspruch 5, mit einer Verriegelung (38, 40) zum Festlegen der Kreuzbeinstütze (6) in einer Stütz- oder Grundposition.

7. Stützeinreichung nach Anspruch 6, wobei die Verriegelung einen Sperrhaken (40) hat, der in Verriegelungseingriff bringbar ist.

8. Stützeinrichtung nach einem der Ansprüche 5 bis 7, mit einer Betätigungseinrichtung zum Herstellen oder Lösen der Verriegelung und zum Verschwenken der Kreuzbeinstütze (6) aus einer Grundposition in die Stützposition oder aus dieser Stützposition in die Grundposition.

9. Stützeinrichtung nach Anspruch 7, wobei die Betätigungseinrichtung ein Federelement (66) ist, das die Kreuzbeinstütze (6) in Richtung ihrer Grundposition und/oder den Sperrhaken (40) in Verriegelungsrichtung beaufschlagt.

10. Stützeinrichtung nach Anspruch 8, wobei die Betätigungseinrichtung einen Betätigungszylinder hat, der die Kreuzbeinstütze (6) in Richtung der Stützposition oder der Grundposition beaufschlagt.

11. Stützeinrichtung nach einem der Ansprüche 8 bis 10, wobei die Betätigungseinrichtung einen Bowdenzug oder dergleichen zum Lösen der Verriegelung oder zum Verschwenken der Kreuzbeinstütze (6) hat.

12. Stützeinrichtung nach Anspruch 11, wobei der Bowdenzug zu einem Lenker oder einem sonstigen Anbau oder Rahmenteil des Rads führt.

13. Stützeinrichtung nach einem der Ansprüche 3 bis 12, wobei die Kreuzbeinstütze (6) über einen Tragarm (32) an der zumindest einen Schiene (18, 20) befestigt ist.

14. Stützeinrichtung nach einem der vorhergehenden Ansprüche, wobei die Kreuzbeinstütze (6) als etwa scheibenförmiges Polster ausgeführt ist.

15. Stützeinrichtung nach Anspruch 13 oder 14, wobei die Kreuzbeinstütze (6) höhenverstellbar und/oder verschwenkbar am Tragarm (32) gehalten ist.
